# EUROPEAN PATENT SPECIFICATION

(11) **EP 3 119 103 B1**
(45) Date of publication and mention of the grant of the patent: **25.08.2021**
(21) Application number: 14885703.0
(22) Date of filing: 04.06.2014
(51) Int. Cl.: H04N 21/482, H04N 21/434, H04N 21/8545

(54) **METHOD AND SYSTEM FOR INTEGRATING TELEVISION PROGRAM CHANNELS AND APPLICATIONS FOR INTELLIGENT TELEVISION**
VERFAHREN UND SYSTEM ZUR INTEGRATION VON TV-PROGRAMMKANÄLEN UND ANWENDUNGEN FÜR INTELLIGENTES FERNSEHEN
PROCÉDÉ ET SYSTÈME D'INTÉGRATION DE CHAÎNES DE PROGRAMMES DE TÉLÉVISION ET D'APPLICATIONS POUR TÉLÉVISION INTELLIGENTE

(30) Priority: 11.03.2014 CN 201410087154
(43) Date of publication of application: 18.01.2017
(73) Proprietor: Huizhou TCL Mobile Communication Co., Ltd., Huizhou, Guangdong 516006 (CN)
(72) Inventor: ZHENG, Yu, Hui Zhou Guangdong 516006 (CN)
(74) Representative: Brachmann, Roland W.
(86) International application number: PCT/CN2014/079129
(87) International publication number: WO 2015/135261

(56) References cited:
- WO-A1-2011/159006
- CN-A- 1 968 400
- CN-A- 101 374 214
- CN-A- 102 016 908
- CN-A- 103 596 020
- US-A- 5 914 746
- US-A1- 2003 041 104
- US-A1- 2008 235 728
- US-A1- 2010 134 701
- US-A1- 2013 055 313
- US-A1- 2013 174 193
- US-A1- 2013 335 631

## Description

The present invention relates to the field of smart TV software, and in particular relates to a method and a system for achieving integration of smart TV program channels with applications.

Along with the continuous progress of science and technology, the development of smart TV has become increasingly rapid; there are more and more apparatuses capable of achieving most functions of smart TV, such as set-top boxes, multimedia boxes and family gateways, and with these apparatuses, it is very easy to change a regular TV to a smart TV and achieve smart TV functions. As an important media expression tool for families, smart TV will exist for a long time. Currently in the TV industry, the basic behavior of TV apparatuses, i.e. the mode of remote control plus screen (which, of course, may also comprise other auxiliary equipment and remote controls) will also exist for a fairly long time. However, users are still unable to be fully accustomed to the mode of using a smart TV to switch applications, and existing smart TVs are unable to provide capabilities of integrating TV program channels with applications to meet user

US2013/055313 A1, US2008/235728 A1, US2013/174193 A1, US2003/041104 A1 and US5914746 A are relevant prior art documents that disclose broadcast receiving systems where applications are assigned to channel numbers.

Therefore, the prior art is still in need of improvement and development.

In light of the above drawbacks of the prior art, the object of the present invention is to provide a method and a system for achieving integration of smart TV program channels with applications with the intention to solve the problem that existing smart TVs are unable to integrate TV program channels with applications.

This object is solved by a method having the features of claim 1 and by a system having the features of claim 7. Advantageous embodiments thereof are defined in the respective dependent claims. Any examples and embodiments of the description not falling within the scope of the claims do not form part of the invention as defined by the independent claims.

The technical solution according to the present invention is as follows:
A method is provided for achieving integration of smart TV program channels with applications, wherein the method comprises steps of:
   - Performing normalization processing on the data of TV program channel information, maintaining a data structure for each TV program channel, and obtaining a program table with items thereof being the information of multiple TV program channels;
   - Performing normalization processing on data of application information, maintaining a data structure for each application, and obtaining an application table with items thereof being the information of multiple applications;
   - Mixing and arranging items in the program table and the application table to obtain a mixed table;
   - Upon receiving a control command, looking for the item corresponding to said control command in said mixed table and displaying the corresponding content.

According to an embodiment, the data structure of TV program channels comprises at least three member variables: channel identification, channel number and channel auxiliary information.

According to an embodiment, the channel identification is label information or key recognition technical parameter of each program channel in a conventional TV, radio TV, IP TV and set-top box; the channel number is an identification information code designated by a broadcasting system or backend service system to a program channel; and the channel auxiliary information refers to other technical information necessary for describing the TV program channel.

According to an embodiment, the data structure of applications comprises at least two member variables: application name and application calling parameter.

According to an embodiment, in the step of mixing and arranging items in the program table and the application table to obtain a mixed table, the rules of mixing and arranging include: items in the program table are arranged in the front and items in the application table are arranged in the back; items in the application table are arranged in the front and items in the program table are arranged in the back; items in the program table and the application table are arranged randomly in a mixed manner; according to the actual use frequency of users, items with high actual use frequency are arranged in the front; an arrangement in the order or reverse order of the time sequence that TV program channels and applications appear, or the order of items in the mixed table is adjusted by a control program at the remote service backend.

According to an embodiment, when an application has a data combination of a variety of application calling parameters, a plurality of items are recorded in the application table that correspond to different application calling parameters in the data combination.

According to an embodiment, the data structure of TV program channels further comprises one or more of the following member variables: channel name, channel description, channel content prompt and program guide.

According to an embodiment, the data structure of applications further comprises calling entry point, type name, registered name in the operating system, and program file name.

According to an embodiment, in the mixed table, each item has a mixing index number and corresponding channel property information, said mixing index number being used to label the content of said item.

According to an embodiment, upon receiving a control command, querying the mixing index number corresponding to said control command, and querying items in the mixed table according to the mixing index number, if said item records the information of a TV program channel, then displaying the corresponding TV program channel, if said item records the information of an application, then running the corresponding application through the application name and application calling parameters in the item, and displaying the application.

A method is provided for achieving integration of smart TV program channels with applications, comprising:
- Performing normalization processing on the data of TV program channel information, maintaining a data structure for each TV program channel, and obtaining a program table with items thereof being the information of multiple TV program channels;
- Performing normalization processing on data of application information, maintaining a data structure for each application, and obtaining an application table with items thereof being the information of multiple applications;
- Mixing and arranging items in the program table and the application table to obtain a mixed table;
- Upon receiving a control command, looking for the item corresponding to said control command in said mixed table and displaying the corresponding content;
- In the step of mixing and arranging items in the program table and the application table to obtain a mixed table, the rules of mixing and arranging include: items in the program table are arranged in the front and items in the application table are arranged in the back; items in the application table are arranged in the front and items in the program table are arranged in the back; items in the program table and the application table are arranged randomly in a mixed manner; according to the actual use frequency of users, items with high actual use frequency are arranged in the front; an arrangement in the order or reverse order of the time sequence that TV program channels and applications appear, or the order of items in the mixed table is adjusted by a control program at the remote service backend.

According to an embodiment, the data structure of TV program channels comprises at least three member variables: channel identification, channel number and channel auxiliary information.

According to an embodiment, the channel identification is label information or key recognition technical parameter of each program channel in a conventional TV, radio TV, IP TV and set-top box; the channel number is an identification information code designated by a broadcasting system or backend service system to a program channel; and the channel auxiliary information refers to other technical information necessary for describing the TV program channel.

According to an embodiment, the data structure of applications comprises at least two member variables: application name and application calling parameter.

According to an embodiment, when an application has a data combination of a variety of application calling parameters, a plurality of items are recorded in the application table that correspond to different application calling parameters in the data combination.

According to an embodiment, the data structure of TV program channels further comprises one or more of the following member variables: channel name, channel description, channel content prompt and program guide.

According to an embodiment, the data structure of applications further comprises calling entry point, type name, registered name in the operating system, and program file name.

According to an embodiment, in the mixed table, each item has a mixing index number and corresponding channel property information, said mixing index number being used to label the content of said item.

According to an embodiment, upon receiving a control command, querying the mixing index number corresponding to said control command, and querying items in the mixed table according to the mixing index number, if said item records the information of a TV program channel, then displaying the corresponding TV program channel, if said item records the information of an application, then running the corresponding application through the application name and application calling parameters in the item, and displaying the application.

A system is provided for achieving integration of smart TV program channels with applications, comprising:
- A program table creation module for performing normalization processing on the data of TV program channel information, maintaining a data structure for each TV program channel, and obtaining a program table with items thereof being the information of multiple TV program channels;
- An application table creation module for performing normalization processing on data of application information, maintaining a data structure for each application, and obtaining an application table with items thereof being the information of multiple applications;
- A mixed table creation module for mixing and arranging items in the program table and the application table to obtain a mixed table;
- A display module for, upon receiving a control command, looking for the item corresponding to said control command in said mixed table and displaying the corresponding content.

Advantageous effects: the present invention sets up a program table and an application table, respectively, uses the program table to record the information of multiple TV program channels, uses the application table to record the information of multiple applications, and then mixes and arranges items in the program table and the application table to obtain a mixed table, thereby effectively integrating TV program channels and applications. In such a way, a user may use a conventional way of transmitting control commands like channel selection for rapid switch between applications and TV programs when using a smart TV, which facilitates the user operations and use, makes the smart TV to better comply with the user's use habits, and makes it easier to transition to scenarios of using smart TVs such that more users are able to conveniently make use of the rich functions of smart TV.

The aforementioned characteristics, features and advantages of the invention as well as the way they are achieved will be further illustrated in connection with the following examples and considerations as discussed in view of the figures.
- Fig.1: is a flow chart of a preferred embodiment of the method for achieving integration of smart TV program channels with applications according to the present invention.
- Fig.2: is a structural block diagram of a preferred embodiment of the system for achieving integration of smart TV program channels with applications according to the present invention.

The present invention provides a method and a system for achieving integration of smart TV program channels with applications. To make the object, technical solution and effect of the present invention clearer and more specific, the present invention will be further described in detail below. It should be understood that the specific embodiments herein are only used to describe the present invention, rather than to limit the present invention.

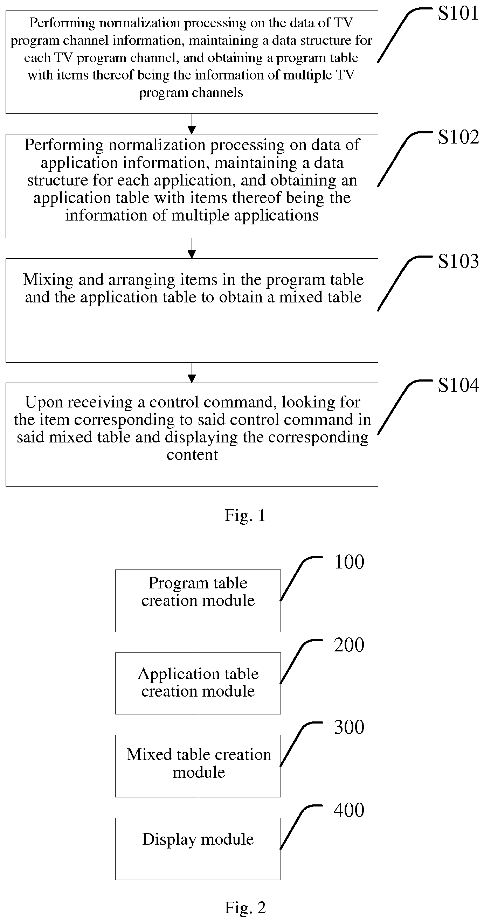

Please refer to Fig.1, and Fig.1 is a flow chart of a preferred embodiment of the method for achieving integration of smart TV program channels with applications according to the present invention. As shown in the figure, it comprises steps of:
S101. Performing normalization processing on the data of TV program channel information, maintaining a data structure for each TV program channel, and obtaining a program table with items thereof being the information of multiple TV program channels;
S102. Performing normalization processing on data of application information, maintaining a data structure for each application, and obtaining an application table with items thereof being the information of multiple applications;
S103. Mixing and arranging items in the program table and the application table to obtain a mixed table;
S104. Upon receiving a control command, looking for the item corresponding to said control command in said mixed table and displaying the corresponding content.

It should be noted that the step numbers in embodiments of the present invention are provided for the purpose of description, and shall not be construed as limitations to the execution steps of the present invention.

In the embodiments of the present invention, based on the existing architecture of a conventional TV, radio TV, IP TV and set-top box system, performing normalization processing on the data of TV program channel information, maintaining a data structure for each TV program channel (including static channel and dynamic channel), and consequently obtaining an application table with items thereof being the information of multiple TV program channels, i.e. each item corresponding to the information of one TV program channel, the data structure of the TV program channel information comprises at least three properties: channel identification, channel number and channel auxiliary information, i.e. each item corresponding to the above three types of information of one TV program channel, among which the channel identification is label information or key recognition technical parameter of each program channel in a conventional TV, radio TV, IP TV and set-top box, the channel number is an identification information code designated by a broadcasting system or backend service system to a program channel, and the channel auxiliary information refers to other technical information necessary for describing the TV program channel. In addition, the data structure of the TV program channel information may further comprise channel name, channel description, channel content prompt, program guide and the information of at least one of other channels that can be dynamically updated. Moreover, the data structure may further comprise other more expanded member variables, from which one or more are selected to add into the data structure.

After the above normalization, a program table with items thereof being the information of multiple TV program channels can be obtained, the length of the program table is variable, each TV program corresponds to one item, and the items record the TV program channel information described by the above data structure.

In addition to setting TV program channels in a unified format, relevant information, properties and contents of applications also need to be managed. The following data structure may be used to record applications set on smart devices. The data structure comprises at least two member variables: application name and application calling parameter, wherein the application name is the application registration information required by the operating system to execute the application during running, specifically including but not limited to: application calling entry point, type name, registered name of the program in the operating system, and program file name, the application calling parameter refers to the parameter information that may be needed or is required to implement the start or calling of application with parameters. Since parameter structures and numbers are different when different applications start, member variables of the application calling parameter are of a complex data, which may vary depending on the operating system and operating environment. When an application has a data combination of a variety of application calling parameters, a plurality of items are recorded in the application table that correspond to different application calling parameters in the data combination. In addition, the data structure of an application may further comprise the program history calling information, program running state, program home subscriber, program multi-access authority or attribute, and program limiting conditions, etc. These optional parameters may all become member variables of the data structure of an application, for example, one or more member variables thereof are selected for addition into the data structure.

After the above normalization, an application table with items thereof being the information of multiple applications can be obtained, the length of the program table is variable, each application corresponds to one or more items, and the items record the application information described by the above data structure.

To mix various TV program channels and application channels for displaying on a user interface and application in a user operation process, the embodiments of the present invention mix and arrange items in the program table and the application table to obtain a mixed table. In the mixed table, each item has a mixing index number and corresponding channel property information, said channel property information is the above TV program channel information or application information, i.e. each item records either the data structure of the TV program channel information or the data structure of the application information, the above mixing index number may be used for display on an user interface to end users, and for reference and operations by end users via a menu, remote control or similar accessory, remote control program, machine button, etc., and certainly, the mixed table may further comprise other optional member variables to assist item management.

Channels in the present invention refer to content identifications or operation units in the devices that are number coded to a user in software and user interfaces running in TV devices, IP TV terminal devices, computer devices, set-top boxes, network multimedia boxes, family gateway devices, business and family multimedia gateway devices, and in other words, the content or function that a user may directly access by inputting or adjusting numbers representing channel numbers through remote control or similar accessories, remote control software, menu or buttons on devices, etc. In the present invention, the channel comprises TV program channels and applications. In other words, when using a smart TV, a user may use a conventional remote control to select channel numbers, thereby entering various TV program channels or applications, which truly achieves the integration of TV program channels with applications. The present invention improves the channel management of conventional TVs and radio TVs, such that the smart TV becomes a more flexible device that is easy to use, which lowers the threshold to use smart TV. To elderly people and children, in particular, they can use expanded functions on smart devices without complex operations and settings, which greatly improves the convenience of use and operations.

In the embodiments of the present invention, mixing and arranging refer to mixing and arranging items in the program table and the application table in the mixed table. With respect to ways of mixing and arranging, the embodiments of the present invention provide a variety of ways, for example, items in the program table are arranged in the front and items in the application table are arranged in the back; items in the application table are arranged in the front and items in the program table are arranged in the back; items in the program table and the application table are arranged randomly in a mixed manner; according to the actual use frequency of users, items with high actual use frequency are arranged in the front; an arrangement in the order or reverse order of the time sequence that TV program channels and applications appear (time sequence of use), or the order of items in the mixed table is adjusted by a control program at the remote service backend, all of these ways may achieve mixing and arranging. Of course, the way of mixing and arranging may also be set according to a user's preference. For example, collect statistics of the time (or actual use frequency) that a user watches TV programs and uses applications, arrange TV program channels with the longest watching time (high actual use frequency) in the front, arrange applications with the longest use time (high actual use frequency) in the front, the priority of TV program channels is higher than that of applications, and at the same time, the order of items in the mixed table may be adjusted by a user or by a control program at the remote service backend, and the order is adjusted in real time by remote commands. For example, collect statistics of the time that a user watches TV program channels and uses applications within one week, then arrange TV program channels with the longest watching time in the front, arrange applications with the longest use time in the front, or designate ad hoc during a channel gap an application recommended to users, etc.

When the mixed table is obtained, if a control command of channel selection is received from a user, for example, the user enters different channel numbers with a remote control, which then queries the mixing index number corresponding to said control command, and queries items in the mixed table according to the mixing index number, if said item records the information of a TV program channel, then displays the corresponding TV program channel, if said item records the information of an application, then runs or calls the application through the application name and application calling parameters in the item, and at the same time, switches device resources, such as display and calculation, to the application so as to satisfy the use by the application.

Based on the above method, the present invention further provides a system for achieving integration of smart TV program channels with applications, as shown in Fig.2, it comprises:
A program table creation module 100 for performing normalization processing on the data of TV program channel information, maintaining a data structure for each TV program channel, and obtaining a program table with items thereof being the information of multiple TV program channels;
An application table creation module 200 for performing normalization processing on data of application information, maintaining a data structure for each application, and obtaining an application table with items thereof being the information of multiple applications;
A mixed table creation module 300 for mixing and arranging items in the program table and the application table to obtain a mixed table;
A display module 400 for, upon receiving a control command, looking for the item corresponding to said control command in said mixed table and displaying the corresponding content.

In summary, the present invention sets up a program table and an application table, respectively, uses the program table to record the information of multiple TV program channels, uses the application table to record the information of multiple applications, and then mixes and arranges items in the program table and the application table to obtain a mixed table, thereby effectively integrating TV program channels and applications. In such a way, a user may use a conventional way of transmitting channel selection control commands for rapid switch between applications and TV programs when using a smart TV, which facilitates the user operations and use, makes the smart TV to better comply with the user's use habits, and makes it easier to transition to scenarios of using smart TVs such that more users are able to conveniently make use of rich functions of smart TV.

It should be understood that applications of the present invention are not limited to the above examples. To those skilled in the art, improvements or modifications may be made according to the above description, and all of these improvements or modifications shall be encompassed by the appended claims of the present invention.

## Claims

1. A method for achieving integration of smart TV program channels with applications, the method comprising the steps of:
- Setting up a program table and an application table, respectively;
- Recording information of multiple TV program channels and information of multiple applications;
- Performing normalization processing on the recorded information of the multiple TV program channels by: inserting the information into the program table maintaining a data structure for each TV program channel, the data structure of TV program channels comprising at least three member variables: channel identification, channel number and channel auxiliary information, thus obtaining a program table with items thereof being the information of multiple TV program channels;
- Performing normalization processing on the recorded information of the multiple applications by: inserting the information maintaining a data structure for each application, the data structure of applications comprising at least two member variables: application name and application calling parameter, thus obtaining an application table with items thereof being the information of multiple applications;
- Mixing and arranging items in the program table and the application table to obtain a mixed table, wherein, in the mixed table, each item has a mixing index number and corresponding channel property information, said mixing index number being used to label the content of said item;
- Upon receiving a control command, looking for the item corresponding to said control command in said mixed table and displaying the corresponding content, wherein, upon receiving a control command, querying the mixing index number corresponding to said control command, and querying items in the mixed table according to the mixing index number, if said item records the information of a TV program channel, then displaying the corresponding TV program channel, if said item records the information of an application, then running the corresponding application through the application name and application calling parameters in the item, and displaying the application, wherein in the step of mixing and arranging items in the program table and the application table to obtain a mixed table, the rules of mixing and arranging include:
items in the program table and the application table are arranged according to the actual use frequency of users;
items with high actual use frequency are arranged in the front;
items are arranged in the order or reverse order of the time sequence that TV program channels and applications appear, or
the order of items in the mixed table is adjusted by a control program at a remote service backend.

2. The method for achieving integration of smart TV program channels with applications according to Claim 1, wherein the channel identification is label information or key recognition technical parameter of each program channel of a conventional TV, radio TV, IP TV and set-top box; the channel number is an identification information code designated by a broadcasting system or the backend service system to a program channel; and the channel auxiliary information refers to other technical information necessary for describing the TV program channel.

3. The method for achieving integration of smart TV program channels with applications according to any of the preceding claims, wherein, when an application has a data combination of a variety of application calling parameters, a plurality of items are recorded in the application table that correspond to different application calling parameters in the data combination.

4. The method for achieving integration of smart TV program channels with applications according to any of the preceding claims, wherein the data structure of TV channel programs further comprises one or more of the following member variables: channel name, channel description, channel content prompt and program guide.

5. The method for achieving integration of smart TV program channels with applications according to any of the preceding claims, wherein the data structure of applications further comprises at least one of: program history calling information, program running state, program home subscriber, program multi-access authority or attribute, and program limiting conditions.

6. The method for achieving integration of smart TV program channels with applications according to any of the preceding claims, wherein the data structure of applications further comprises calling entry point, type name, registered name in the operating system, and program file name.

7. A system for achieving integration of smart TV program channels with applications, comprising:
- A program table creation module for setting up a program table; recording information of multiple TV program channels; and performing normalization processing on the recorded information of the multiple TV program channels by: inserting the information into the program table maintaining a data structure for each TV program channel, the data structure comprising at least three member variables: channel identification, channel number and channel auxiliary information, thus obtaining a program table with items thereof being the information of multiple TV program channels;
- An application table creation module for setting up an application table recording information of multiple applications; and performing normalization processing on the recorded information of the multiple application information, maintaining a data structure for each application, the data structure comprising at least two member variables: application name and application calling parameter thus and obtaining an application table with items thereof being the information of multiple applications;
- A mixed table creation module for mixing and arranging items in the program table and the application table to obtain a mixed table wherein, in the mixed table, each item has a mixing index number and corresponding channel property information, said mixing index number being used to label the content of said item;
- A display module for, upon receiving a control command, looking for the item corresponding to said control command in said mixed table and displaying the corresponding content, wherein, upon receiving a control command, querying the mixing index number corresponding to said control command, and querying items in the mixed table according to the mixing index number, if said item records the information of a TV program channel, then displaying the corresponding TV program channel, if said item records the information of an application, then running the corresponding application through the application name and application calling parameters in the item, and displaying the application,
wherein in the step of mixing and arranging items in the program table and the application table to obtain a mixed table, the rules of mixing and arranging include:
items in the program table and the application table are arranged according to the actual use frequency of users;
items with high actual use frequency are arranged in the front;
items are arranged in the order or reverse order of the time sequence that TV program channels and applications appear, or
the order of items in the mixed table is adjusted by a control program at the remote service backend.

## Patentansprüche

1. Verfahren zum Erreichen einer Integration von Smart-TV-Programmkanälen mit Anwendungen, wobei das Verfahren die folgenden Schritte umfasst:
- Aufbauen einer Programmtabelle bzw. einer Anwendungstabelle;
- Aufzeichnen von Informationen von mehreren TV-Programmkanälen und Informationen von mehreren Anwendungen;
- Durchführen einer Normalisierungsverarbeitung an den aufgezeichneten Informationen der mehreren TV-Programmkanäle durch: Einsetzen der Informationen in die Programmtabelle, die eine Datenstruktur für jeden TV-Programmkanal pflegt, wobei die Datenstruktur von TV-Programmkanälen mindestens drei Elementvariablen umfasst: eine Kanalidentifizierung, eine Kanalnummer und Kanalhilfsinformationen, wodurch eine Programmtabelle erhalten wird, deren Elemente die Informationen von mehreren TV-Programmkanälen sind;
- Durchführen einer Normalisierungsverarbeitung an den aufgezeichneten Informationen der mehreren Anwendungen durch: Einsetzen der Informationen, die eine Datenstruktur für jede Anwendung pflegen, wobei die Datenstruktur von Anwendungen mindestens zwei Elementvariablen umfasst: einen Anwendungsnamen und Anwendungsaufrufparameter, wodurch eine Anwendungstabelle erhalten wird, deren Elemente die Informationen von mehreren Anwendungen sind;
- Mischen und Anordnen von Elementen in der Programmtabelle und der Anwendungstabelle, um eine gemischte Tabelle zu erhalten, wobei jedes Element in der gemischten Tabelle eine Mischindexnummer und entsprechende Kanaleigenschaftsinformationen aufweist und die Mischindexnummer verwendet wird, um den Inhalt des Elements zu bezeichnen; und
- Suchen des Elements, das in der gemischten Tabelle der Steueranweisung entspricht, und Anzeigen des entsprechenden Inhalts nach Eingang einer Steueranweisung, Abfragen der Mischindexnummer, die der Steueranweisung entspricht, und Abfragen von Elementen in der gemischten Tabelle gemäß der Mischindexnummer nach Eingang einer Steueranweisung, Anzeigen dann, wenn das Element die Informationen eines TV-Programmkanals aufzeichnet, des entsprechenden TV-Programmkanals, Ausführen dann, wenn das Element die Informationen einer Anwendung aufzeichnet, der entsprechenden Anwendung über den Anwendungsnamen und Anwendungsaufrufparameter im Element und Anzeigen der Anwendung, wobei
im Schritt des Mischens und des Anordnens von Elementen in der Programmtabelle und der Anwendungstabelle, um eine gemischte Tabelle zu erhalten, die Regeln des Mischens und des Anordnens Folgendes enthalten:
Elemente in der Programmtabelle und der Anwendungstabelle werden gemäß der tatsächlichen Verwendungshäufigkeit von Anwendern angeordnet;
Elemente mit hoher tatsächlicher Verwendungshäufigkeit werden vorne angeordnet;
Elemente werden in der Reihenfolge oder der umgekehrten Reihenfolge der zeitlichen Abfolge, in der TV-Programmkanäle und Anwendungen erscheinen, angeordnet, oder
die Reihenfolge von Elementen in der gemischten Tabelle wird durch ein Steuerprogramm bei einem entfernten Dienst-Backend angepasst.

2. Verfahren zum Erreichen einer Integration von Smart-TV-Programmkanälen mit Anwendungen nach Anspruch 1, wobei die Kanalidentifizierung Etiketteninformationen oder technische Schlüsselerkennungsparameter jedes Programmkanals eines herkömmlichen Fernsehers, eines Funkfernsehers, eines IP-Fernsehers und einer Set-Top-Box sind; die Kanalnummer ein Identifizierungsinformationscode ist, der durch ein Rundrufsystem oder das Backend-Dienstsystem zu einem Programmkanal festgelegt ist; und die Kanalhilfsinformationen sich auf weitere technische Informationen beziehen, die zum Beschreiben des TV-Programmkanals nötig sind.

3. Verfahren zum Erreichen einer Integration von Smart-TV-Programmkanälen mit Anwendungen nach einem der vorhergehenden Ansprüche, wobei dann, wenn eine Anwendung eine Datenkombination einer Vielzahl von Anwendungsaufrufparametern besitzt, mehrere Elemente, die verschiedenen Anwendungsaufrufparametern in der Datenkombination entsprechen, in der Anwendungstabelle aufgezeichnet werden.

4. Verfahren zum Erreichen einer Integration von Smart-TV-Programmkanälen mit Anwendungen nach einem der vorhergehenden Ansprüche, wobei die Datenstruktur von TV-Kanalprogrammen ferner eine oder mehrere der folgenden Elementvariablen umfasst: Kanalname, Kanalbeschreibung, Kanalinhaltsanzeige und Programmführer.

5. Verfahren zum Erreichen einer Integration von Smart-TV-Programmkanälen mit Anwendungen nach einem der vorhergehenden Ansprüche, wobei die Datenstruktur von Anwendungen ferner Folgendes umfasst: Programmverlaufs-Aufrufinformationen und/oder einen Programmausführungszustand und/oder einen Programmheimatteilnehmer und/oder eine Befugnis oder ein Merkmal für Programmmehrfachzugriff und/oder Programmbeschränkungsbedingungen.

6. Verfahren zum Erreichen einer Integration von Smart-TV-Programmkanälen mit Anwendungen nach einem der vorhergehenden Ansprüche, wobei die Datenstruktur von Anwendungen ferner einen Aufrufeintrittspunkt, einen Typnamen, einen im Betriebssystem registrierten Namen und einen Programmdateinamen umfasst.

7. System zum Erreichen einer Integration von Smart-TV-Programmkanälen mit Anwendungen, das Folgendes umfasst:
- ein Programmtabellenerstellmodul zum Aufbauen einer Programmtabelle; Aufzeichnen von Informationen von mehreren TV-Programmkanälen und Durchführen einer Normalisierungsverarbeitung an den aufgezeichneten Informationen der mehreren TV-Programmkanäle durch: Einsetzen der Informationen in die Programmtabelle, die eine Datenstruktur für jeden TV-Programmkanal pflegt, wobei die Datenstruktur mindestens drei Elementvariablen umfasst: eine Kanalidentifizierung, eine Kanalnummer und Kanalhilfsinformationen, wodurch eine Programmtabelle erhalten wird, deren Elemente die Informationen von mehreren TV-Programmkanälen sind;
- ein Anwendungstabellenerstellmodul zum Aufbauen einer Anwendungstabelle; Aufzeichnen der Informationen von mehreren Anwendungen; und Durchführen einer Normalisierungsverarbeitung an den aufgezeichneten Informationen der mehreren Anwendungsinformationen, die eine Datenstruktur für jede Anwendung pflegen, wobei die Datenstruktur mindestens zwei Elementvariablen umfasst: einen Anwendungsnamen und Anwendungsaufrufparameter, wodurch eine Anwendungstabelle erhalten wird, deren Elemente die Informationen von mehreren Anwendungen sind;
- ein Mischtabellenerstellmodul zum Mischen und Anordnen von Elementen in der Programmtabelle und der Anwendungstabelle, um eine gemischte Tabelle zu erhalten, wobei jedes Element in der gemischten Tabelle eine Mischindexnummer und entsprechende Kanaleigenschaftsinformationen aufweist und die Mischindexnummer verwendet wird, um den Inhalt des Elements zu bezeichnen; und
- ein Anzeigemodul zum Suchen des Elements, das in der gemischten Tabelle der Steueranweisung entspricht, und Anzeigen des entsprechenden Inhalts nach Eingang einer Steueranweisung, Abfragen der Mischindexnummer, die der Steueranweisung entspricht, und Abfragen von Elementen in der gemischten Tabelle gemäß der Mischindexnummer nach Eingang einer Steueranweisung, Anzeigen dann, wenn das Element die Informationen eines TV-Programmkanals aufzeichnet, des entsprechenden TV-Programmkanals, Ausführen dann, wenn das Element die Informationen einer Anwendung aufzeichnet, der entsprechenden Anwendung über den Anwendungsnamen und Anwendungsaufrufparameter im Element und Anzeigen der Anwendung, wobei
im Schritt des Mischens und des Anordnens von Elementen in der Programmtabelle und der Anwendungstabelle, um eine gemischte Tabelle zu erhalten, die Regeln des Mischens und des Anordnens Folgendes enthalten:
Elemente in der Programmtabelle und der Anwendungstabelle werden gemäß der tatsächlichen Verwendungshäufigkeit von Anwendern angeordnet;
Elemente mit hoher tatsächlicher Verwendungshäufigkeit werden vorne angeordnet;
Elemente werden in der Reihenfolge oder der umgekehrten Reihenfolge der zeitlichen Abfolge, in der TV-Programmkanäle und Anwendungen erscheinen, angeordnet, oder
die Reihenfolge von Elementen in der gemischten Tabelle wird durch ein Steuerprogramm bei dem entfernten Dienst-Backend angepasst.

## Revendications

1. Procédé permettant d'obtenir l'intégration de canaux de programme TV intelligent à l'aide d'applications, le procédé comprenant les étapes consistant à :
- établir une table de programme et une table d'application, respectivement ;
- enregistrer des informations de multiples canaux de programme TV et des informations de multiples applications ;
- effectuer un traitement de normalisation sur les informations enregistrées des multiples canaux de programme TV en : insérant les informations dans la table de programme conservant une structure de données pour chaque canal de programme TV, la structure de données des canaux de programme TV comprenant au moins trois variables d'éléments : une identification de canaux, un nombre de canaux et des informations auxiliaires de canaux, ce qui permet d'obtenir une table de programme dont les éléments sont les informations des multiples canaux de programme TV ;
- effectuer un traitement de normalisation sur les informations enregistrées des multiples applications en : insérant les informations conservant une structure de données pour chaque application, la structure de données des applications comprenant au moins deux variables d'éléments : un nom d'application et un paramètre d'appel d'application, ce qui permet d'obtenir une table d'application dont les éléments sont les informations des multiples applications ;
- mélanger et disposer des éléments dans la table de programme et la table d'application pour obtenir une table mélangée, dans lequel, dans la table mélangée, chaque élément a un nombre d'indices de mélange et des informations de propriété de canaux correspondantes, ledit nombre d'indices de mélange étant utilisé pour étiqueter le contenu dudit élément ;
- lors de la réception d'une commande de contrôle, rechercher l'élément correspondant à ladite commande de contrôle dans ladite table mélangée et afficher le contenu correspondant, dans lequel, lors de la réception d'une commande de contrôle, demander le nombre d'indices de mélange correspondant à ladite commande de contrôle, et demander des éléments dans la table mélangée en fonction du nombre d'indices de mélange, si ledit élément enregistre les informations d'un canal de programme TV, alors afficher le canal de programme TV correspondant, si ledit élément enregistre les informations d'une application, alors exécuter l'application correspondante à travers le nom d'application et les paramètres d'appel d'application dans l'élément, et afficher l'application, dans lequel dans l'étape de mélange et de disposition des éléments dans la table de programme et la table d'application pour obtenir une table mélangée, les règles de mélange et de disposition comprennent :
des éléments dans la table de programme et la table d'application sont disposés en fonction de la fréquence d'utilisation réelle des utilisateurs ;
des éléments ayant une fréquence d'utilisation réelle élevée sont disposés à l'avant ;
des éléments sont disposés dans l'ordre ou dans l'ordre inverse de la séquence temporelle où apparaissent les canaux de programme TV et les applications, ou
l'ordre des éléments dans la table mélangée est réglé par un programme de commande au niveau d'un système dorsal de service distant.

2. Procédé permettant d'obtenir l'intégration de canaux de programme TV intelligent à l'aide d'applications selon la revendication 1, dans lequel l'identification de canal représente des informations d'étiquette ou un paramètre technique de reconnaissance de clé de chaque canal de programme d'une TV conventionnelle, d'une TV radio, d'une TV IP et d'un boîtier décodeur ; le nombre de canaux représente un code d'informations d'identification désigné par un système de diffusion ou le système de service de système dorsal à un canal de programme ; et les informations auxiliaires de canaux font référence aux autres informations techniques nécessaires pour décrire le canal de programme TV.

3. Procédé permettant d'obtenir l'intégration de canaux de programme TV intelligent à l'aide d'applications selon l'une quelconque des revendications précédentes, dans lequel, lorsqu'une application a une combinaison de données d'une variété de paramètres d'appel d'application, une pluralité d'éléments sont enregistrés dans la table d'application qui correspond à différents paramètres d'appel d'application dans la combinaison de données.

4. Procédé permettant d'obtenir l'intégration de canaux de programme TV intelligent à l'aide d'applications selon l'une quelconque des revendications précédentes, dans lequel la structure de données des programmes de canaux TV comprend en outre une ou plusieurs des variables d'éléments suivantes : un nom de canaux, une description de canaux, une invitation de contenu de canaux et un guide de programme.

5. Procédé permettant d'obtenir l'intégration de canaux de programme TV intelligent à l'aide d'applications selon l'une quelconque des revendications précédentes, dans lequel la structure de données des applications comprend en outre au moins un élément parmi : des informations d'appel d'historique de programme, un état d'exécution du programme, un abonné domestique au programme, une autorité ou un attribut d'accès multiples au programme, et des conditions de limitation du programme.

6. Procédé permettant d'obtenir l'intégration de canaux de programme TV intelligent à l'aide d'applications selon l'une quelconque des revendications précédentes, dans lequel la structure de données d'applications comprend en outre un point d'entrée d'appel, un nom de type, un nom enregistré dans le système d'exploitation et un nom de fichier de programme.

7. Système permettant d'obtenir l'intégration de canaux de programme TV intelligent à l'aide d'applications, comprenant :
- un module de création de table de programme pour établir une table de programme ; enregistrer des informations de multiples canaux de programme TV ; et effectuer un traitement de normalisation sur les informations enregistrées des multiples canaux de programme TV en : insérant les informations dans la table de programme conservant une structure de données pour chaque canal de programme TV, la structure de données comprenant au moins trois variables d'éléments : une identification de canaux, un nombre de canaux et des informations auxiliaires de canaux, ce qui permet d'obtenir une table de programme dont les éléments sont les informations des multiples canaux de programme TV ;
- un module de création de table d'application pour établir des informations d'enregistrement de table d'application des multiples applications ; et effectuer un traitement de normalisation sur les informations enregistrées des multiples informations d'application, conservant une structure de données pour chaque application, la structure de données comprenant au moins deux variables d'éléments : un nom d'application et un paramètre d'appel d'activation, ce qui permet d'obtenir une table d'application dont les éléments sont les informations des multiples associations ;
- un module de création de table mélangée pour mélanger et disposer des éléments dans la table de programme et la table d'application pour obtenir une table mélangée, dans lequel, dans la table mélangée, chaque élément a un nombre d'indices de mélange et des informations de propriété de canaux correspondantes, ledit nombre d'indices de mélange étant utilisé pour étiqueter le contenu dudit élément ;
- un module d'affichage pour, lors de la réception d'une commande de contrôle, rechercher l'élément correspondant à ladite commande de contrôle dans ladite table mélangée et afficher le contenu correspondant, dans lequel, lors de la réception d'une commande de contrôle, demander le nombre d'indices de mélange correspondant à ladite commande de contrôle, et demander des éléments dans la table mélangée en fonction du nombre d'indices de mélange, si ledit élément enregistre les informations d'un canal de programme TV, alors afficher le canal de programme TV correspondant, si ledit élément enregistre les informations d'une application, alors exécuter l'application correspondante à travers le nom d'application et les paramètres d'appels d'application dans l'élément, et afficher l'application,
dans lequel dans l'étape de mélange et de disposition des éléments dans la table de programme et la table d'application pour obtenir une table mélangée, les règles de mélange et de disposition comprennent :
des éléments dans la table de programme et la table d'application sont disposés en fonction de la fréquence d'utilisation réelle des utilisateurs ;
des éléments ayant une fréquence d'utilisation réelle élevée sont disposés à l'avant ;
des éléments sont disposés dans l'ordre ou dans l'ordre inverse de la séquence temporelle où apparaissent les canaux de programme TV et les applications, ou
l'ordre des éléments dans la table mélangée est réglé par un programme de commande au niveau du système dorsal de service distant.
